# FASCICULE DE BREVET EUROPEEN

(11) **EP 0 494 006 B1**
(45) Date de publication et mention de la délivrance du brevet: **23.08.1995**
(21) Numéro de dépôt: 91403485.5
(22) Date de dépôt: 20.12.1991
(51) Int. Cl.: F04D 9/04, F04D 13/04, F04D 1/02, F02K 9/46

(54) **Turbopompe à gavage intégré en flux dérivé**
Turbopumpe mit einer durch Bypassströmung angetriebenen Überdruckpumpe
Turbopump with bleed flow booster pump

(30) Priorité: 31.12.1990 FR 9016547
(43) Date de publication de la demande: 08.07.1992
(73) Titulaire: SOCIETE EUROPEENNE DE PROPULSION, 92150 Suresnes (FR)
(72) Inventeur: Girault, Jean-Philippe, F-27510 Tourny (FR)
(74) Mandataire: Thévenet, Jean-Bruno

(56) Documents cités:
- EP-A- 0 374 020
- DE-C- 885 050
- DE-C- 1 001 113
- US-A- 3 004 494
- US-A- 3 093 084
- US-A- 3 103 176
- US-A- 4 449 888
- RUSSIAN ENGINEERING JOURNAL, vol. 53, no. 11, 1973, pages 31-35; O.V. BAIBAKOVet al.: "Better power/speed cavitation for centrifugal pumps"

## Description

### Domaine de l'invention

La présente invention concerne une turbopompe à gavage intégré en flux dérivé, pour la pressurisation d'un fluide.

Les turbopompes sont utilisées dans différents domaines et notamment dans le domaine spatial pour la pressurisation d'ergols.

La recherche d'un accroissement des rendements et simultanément d'une réduction de l'encombrement et de la masse d'une turbopompe conduit à choisir des vitesses de rotation élevées.

Aux grandes vitesses de rotation, le risque de cavitation est accru. C'est pourquoi on a déjà envisagé d'associer une pompe haute pression à une pompe de gavage basse pression, cette dernière procurant l'augmentation de pression nécessaire à l'entrée du rouet haute pression pour éviter toute cavitation aux grandes vitesses de rotation.

### Art antérieur

Différents modes d'entraînement d'une pompe basse pression de gavage et différentes façons d'associer des circuits basse pression (BP) et haute pression (HP) ont déjà été proposés.

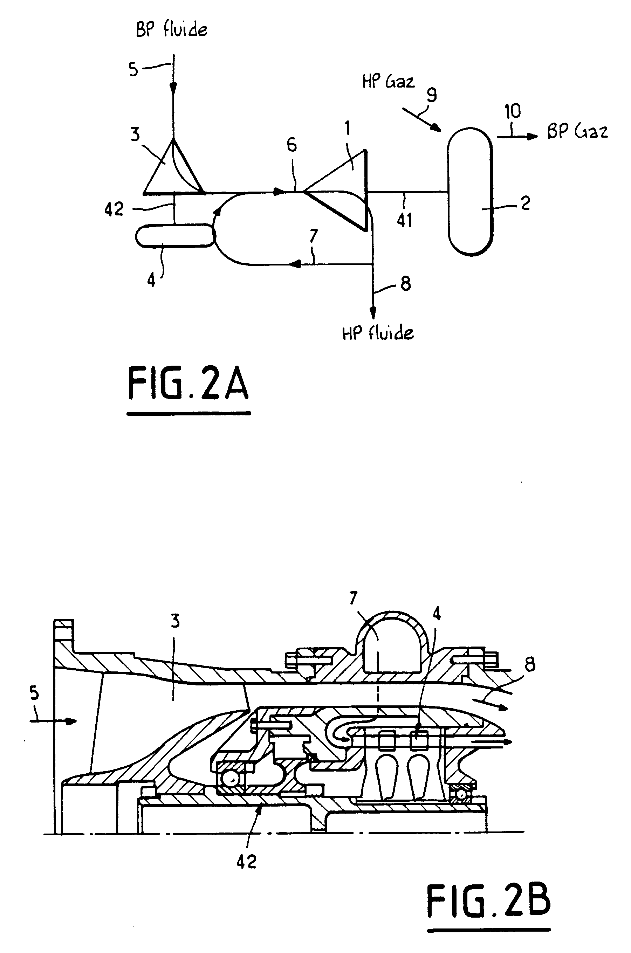

Ainsi, un mode d'entraînement traditionnel d'une pompe basse pression de gavage 3, représenté schématiquement sur la figure 2A, est constitué par un circuit en dérivation. Dans ce cas, une partie 7 du fluide HP véhiculé par la pompe haute pression 1 est recirculée de la sortie de la pompe HP 1 à la turbine hydraulique basse pression 4 qui sert à l'entraînement de la pompe BP de gavage 3. Le fluide BP 5 introduit dans la pompe BP 3 présente à la sortie de celle-ci une pression moyenne (MP) de sorte que le courant de fluide 6 à moyenne pression appliqué à l'entrée de la pompe HP 1 permet d'éviter toute cavitation au niveau de la pompe HP 1 même si celle-ci présente une vitesse de rotation élevée. Le fluide HP 7 recirculé vers la turbine hydraulique 4 entraînant l'arbre 42 de la pompe BP 3 ne constitue qu'une relativement faible fraction du courant de flux de HP utile 8. L'arbre 41 de la pompe HP 1 est lui-même entraîné de façon classique par une turbine à gaz 2 présentant une entrée 9 de gaz HP et une sortie 10 de gaz BP.

La figure 2B montre un exemple particulier de réalisation d'une pompe, telle que celle illustrée schématiquement sur la figure 2A, proposée dans une monographie de la NASA intitulée "Turbopump systems for liquid rocket engines SP-8107, pp. 53-55. La figure 2B montre ainsi une pompe de gavage BP 3 entraînée par une turbine hydraulique 4 alimentée à partir d'une fraction 7 du fluide HP 8 issu de la pompe HP 1, elle-même entraînée à partir d'une turbine à gaz non représentée sur la figure 2B.

Les systèmes du type de ceux illustrés en référence aux figures 2A et 2B nécessitent des liaisons hydrauliques haute pression - basse pression encombrantes, difficiles à étancher, la recirculation d'un faible débit sous de fortes pertes de charges n'offrant pas le meilleur compromis fonctionnel et ne permettant pas de remédier à tous les problèmes de cavitation au niveau du rouet HP de la pompe HP 1. Par ailleurs, l'adoption d'un montage "en ligne", dans lequel la pompe BP 3 est placée devant la pompe HP 1, conduit à un ensemble hydraulique encombrant.

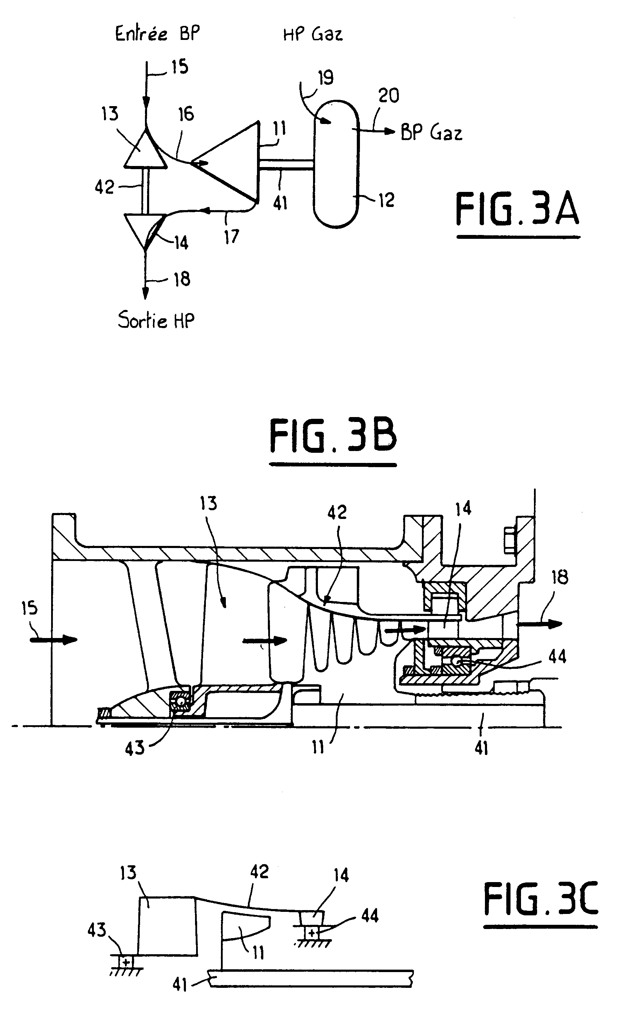

Les figures 3A à 3D montrent des systèmes associant une pompe de gavage BP 13 à une pompe HP 11, selon un circuit en cascade. La figure 3A présente le schéma de principe d'un tel système, dans lequel tout le débit de fluide 17 sortant de la pompe HP 11 actionne, avec une faible détente, la turbine hydraulique BP 14 qui entraîne par l'arbre BP 42 la pompe de gavage 13 recevant le courant de fluide BP d'entrée 15 pour renvoyer à l'entrée du rouet HP de la pompe HP 11 un courant de fluide 16 à moyenne pression. Comme dans le cas du système de la figure 2A, l'arbre 41 de la pompe HP 11 délivre un courant de sortie 18 et est entraîné de façon classique par une turbine à gaz 12 présentant une entrée 19 de gaz HP et une sortie 20 de gaz BP.

Les figures 3B et 3C montrent un exemple d'application du circuit de la figure 3A au cas d'une pompe de gavage 13 de faible puissance. La figure 3B montre l'agencement des différents constituants du système de la figure 3A, à l'exception de la turbine à gaz 12 qui n'est pas représentée et la figure 3C montre, de façon simplifiée, les dispositions relatives, dans l'agencement de la figure 3B, de l'arbre menant principal 41 entraîné par la turbine à gaz 12 et de l'arbre mené hydrauliquement 42 avec ses paliers 43, 44 de support par rapport au bâti. La figure 3C fait apparaître de façon symbolique les éléments tournants solidaires des arbres 41 et 42, c'est-à-dire les éléments tournants de la turbine hydraulique 14 et de la pompe BP 13 qui sont solidaires de l'arbre secondaire BP 42 et les éléments tournants de la pompe HP 11, qui sont solidaires de l'arbre principal HP 41.

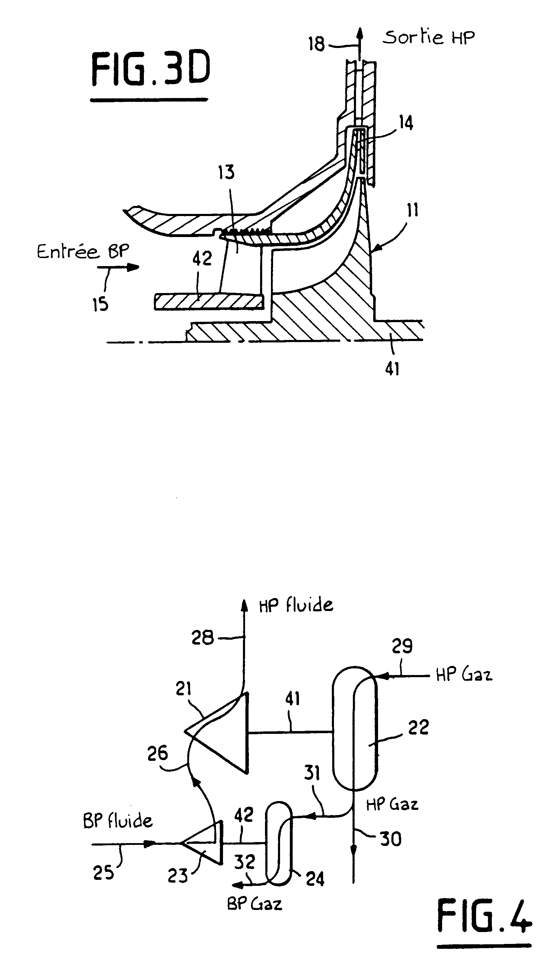

La figure 3D illustre un autre mode particulier de réalisation d'un circuit impliquant un cycle en cascade, tel que celui de la figure 3A, qui a été décrit dans un ouvrage de O.E.BALJE, intitulé "Turbomachines", p. 429, paru aux Editions Wiley en 1981. Dans ce cas, la turbine hydraulique 14 est constituée d'un diffuseur tournant placé en aval du rouet HP de la pompe HP 11 et solidaire d'un inducteur BP 13 qui joue une fonction de même nature que la pompe de gavage 13 de la figure 3A, et se trouve placé en amont du rouet de la pompe HP 11.

Les tentatives d'expérimentation d'un agencement tel que celui de la figure 3D se sont cependant heurtées à de complexes problèmes de paliers et ont été limitées à des essais à faible vitesse et faible puissance.

La figure 4 montre le schéma de principe d'un système de turbopompe avec pompe BP de gavage dans lequel une pompe BP de gavage 23 est solidaire d'un arbre 42 entraîné par une turbine à gaz 24 alimentée à partir d'un courant de gaz principal 22 d'entraînement de la pompe HP 21. Sur la figure 4, la référence 29 désigne le courant de gaz HP appliqué à la turbine à gaz principale 22 tandis que la référence 32 désigne le courant de gaz BP issu de la turbine à gaz auxiliaire 24. Les références 25, 26 et 28 désignent elles-mêmes respectivement le courant de liquide BP en entrée de la pompe de gavage 23, le courant de liquide MP issu de la pompe de gavage 23 et appliqué à la pompe HP 21 et le courant de liquide HP délivré par la pompe HP 21.

Un système tel que celui de la figure 4 est désavantagé par les problèmes de dilatation différentielle entre les pièces froides côté pompe et chaudes côté turbine et par les problèmes d'étanchéités entre circuits de liquide et circuits de gaz, qui sont inhérents à ce cycle. Un cycle tel que celui de la figure 4 est par ailleurs proscrit dans le cas des fluides chimiquement très actifs tels que l'oxygène liquide.

D'une manière générale, les systèmes tels que celui illustré sur la figure 4 présentent des puissances massiques élevées, sont complexes et, associant deux turbomachines, sont tributaires d'un encombrement important. Une telle architecture implique une complexité de montage, un nombre de pièces important et des points de fixation multiples pouvant conduire à de difficiles problèmes de vibrations dans des structures suspendues à la chambre propulsive.

### Objet et description succincte de l'invention

La présente invention vise à remédier aux inconvénients des systèmes de l'art antérieur et à permettre l'utilisation d'une pompe basse pression de gavage en association avec une turbopompe, dans le but de supprimer ou limiter le phénomène de cavitation dans la partie de la pompe haute pression aux grandes vitesses de rotation, en atteignant une compacité importante de l'ensemble tout en conservant un niveau élevé des performances.

Ces buts sont atteints grâce à une turbopompe à gavage intégré en flux dérivé, pour la pressurisation d'un fluide, selon les caracteristiques de la revendication 1.

La turbopompe comprend en outre de préférence un inducteur haute pression monté sur l'arbre principal entre le canal de retour et le rouet haute pression.

De par le principe consistant à partager la puissance entre une pompe basse pression et une pompe haute pression incorporée dans la pompe basse pression, il est possible d'obtenir, pour une turbopompe conforme à l'invention, un rendement élevé, avec une possibilité d'optimisation des pompes aussi grande ou même meilleure qu'avec des pompes séparées, et une obtention d'une vitesse de rotation élevée. Le rendement peut être d'autant plus élevé que le raccourcissement des circuits par rapport aux systèmes de l'art antérieur, tels que ceux des figures 2A, 2B, 3A à 3D et 4, conduit à une diminution des pertes de charges en ligne.

L'architecture particulièrement compacte de la turbopompe selon l'invention, avec intégration dans la turbomachine, d'un surpresseur rotatif constitué par un rouet de gavage entraîné par une faible fraction du fluide pressurisé et destiné à accroître la pression du fluide à son entrée dans la pompe principale conduit à une diminution importante de la masse totale de la machine et de son encombrement tout en réduisant le nombre de pièces nécessaires sans augmentation des difficultés de production des pièces. Ces avantages sont particulièrement importants dans le cadre d'une turbopompe de moteur-fusée, dans la mesure où l'architecture de la machine et son montage sur l'ensemble propulsif sont grandement simplifiés par la diminution du nombre de pièces et des raccordements au moteur.

La réduction des temps d'assemblage de la machine et du montage sur l'ensemble propulsif conduisent à une réduction des coûts.

La diminution du nombre d'organes, de la sensibilité aux vibrations et de la complexité du montage accroît la sûreté de fonctionnement.

La conception d'ensemble est simplifiée du fait de l'absence de circuits spéciaux de récupération et de gestion des fuites de liquide ou de gaz, et il est possible d'utiliser un canal de refoulement qui a une forme plus simple que celle d'une volute et peut même être un tore ce qui en réduit le coût.

Grâce à la structure particulière de l'échangeur d'énergie mécanique, qui permet à une partie du flux de liquide pressurisé par la pompe principale, de céder au rouet de gavage une faible fraction de l'énergie produite au niveau du rouet HP, il ne se surajoute quasiment pas d'échanges thermiques aux échanges d'énergie mécanique.

La constitution de l'échangeur d'énergie mécanique sous la forme d'une turbine-rouet à aubes creuses contribue à la compacité de l'ensemble de la machine par la combinaison de deux fonctions jouées par des organes séparés dans la réalisation de l'art antérieur. Ainsi, selon l'invention, l'intérieur des aubes creuses, qui est traversé par une partie du flux pressurisé par la pompe principale, joue le rôle de turbine pour la pompe basse pression tandis que l'extérieur de ces aubes joue le rôle de rouet de la pompe de gavage.

Selon un mode particulier de réalisation de l'invention, la pompe basse pression de gavage définit un courant de fluide moyenne pression essentiellement parallèle à l'axe de la turbopompe tandis que la pompe haute pression est agencée de telle manière que le rouet haute pression refoule le fluide haute pression, vers le canal de refoulement dans un plan approximativement perpendiculaire à l'axe de la turbopompe.

Le canal de dérivation prend lui-même naissance dans le canal de refoulement de telle manière que le courant de liquide dérivé qui constitue un faible débit, peut pénétrer par l'extérieur dans les aubes creuses incurvées du rouet basse pression, de façon centripète.

Ce mode de réalisation est particulièrement avantageux d'un point de vue fonctionnel et se prête à une réalisation aisée, dans la mesure où seul un faible débit, sous une relativement forte différence de pression, traverse les aubes creuses incurvées du rouet basse pression. Le dimensionnement des aubes creuses mobiles est d'autant plus facile à réaliser que le débit devant traverser ces aubes creuses est faible.

L'arbre principal porte un rotor solidaire du rouet haute pression qui définit avec l'arbre secondaire un espace de réception du flux dérivé ayant traversé les aubes creuses incurvées et renvoie ce flux dérivé vers l'arrivée de fluide basse pression à travers des paliers de support de l'arbre secondaire par rapport à l'arbre principal et des orifices de sortie ménagés dans l'arbre secondaire.

L'arbre principal entraîné à grande vitesse par la turbine est monté par rapport au carter d'une part à l'aide d'un palier hydrostatique disposé entre le redresseur basse pression et l'inducteur haute pression ou le rouet haute pression et d'autre part un palier adapté aux grandes vitesses monté dans le fond arrière du canal de retour.

L'arbre secondaire est monté sur l'arbre principal par l'intermédiaire d'un roulement à rouleaux et de roulements à billes.

Cette disposition à quatre paliers permet d'obtenir une vitesse de rotation élevée pour l'arbre principal HP et la rotation libre de l'ensemble basse pression entraîné par la turbine hydraulique.

On notera que les paliers placés entre la pompe BP et la pompe HP tournent à une vitesse relative faible qui correspond à la différence entre les vitesses de rotation de l'arbre principal HP et de l'arbre secondaire BP. De la sorte, les paliers sont peu sollicités et leur durée de vie est augmentée.

Selon un mode particulier de réalisation, ledit palier monté dans le fond arrière du canal de retour est un palier à billes lubrifié et refroidi par un faible débit de fluide moyenne pression prélevé en sortie du redresseur basse pression par un canal de recirculation de faible longueur ménagé dans la paroi du canal de retour.

Selon un autre mode particulier de réalisation, ledit palier monté dans le fond arrière du canal de retour est un palier fluide ou à foils alimenté par un faible débit de fluide moyenne pression prélevé en sortie du redresseur basse pression par un canal de recirculation de faible longueur ménagé dans la paroi du canal de retour.

Selon encore un autre mode particulier de réalisation, ledit palier monté dans le fond arrière du canal de retour est un palier magnétique actif refroidi par un faible débit de fluide moyenne pression prélevé en sortie du redresseur basse pression par un canal de recirculation de faible longueur ménagé dans la paroi du canal de retour.

Le faible débit de fluide moyenne pression prélevé à travers ledit canal de recirculation est rejeté en un point de la turbopompe à faible pression, tel que l'entrée de la pompe basse pression, par un canal inclus dans l'arbre principal et coaxial à celui-ci.

Cette disposition évite toute tuyauterie externe, minimise les pertes en ligne et assure des conditions fonctionnelles en débit, surpression, température, optimales pour le palier supportant l'arbre principal à grande vitesse. Elle assure également une grande simplicité du montage et une diminution du nombre de pièces, ce qui contribue à réduire les coûts et à augmenter la sûreté de fonctionnement.

Le palier hydrostatique disposé entre le redresseur basse pression et l'inducteur haute pression ou le rouet haute pression est alimenté à l'aide d'une faible partie du fluide de sortie haute pression présent dans le canal de refoulement, par l'intermédiaire d'un canal de recirculation interne court intégré au carter et de canaux ménagés dans le redresseur basse pression, l'évacuation de cette faible partie de fluide recirculée dans le palier hydrostatique s'effectuant directement à l'entrée de la pompe haute pression et à la sortie de la pompe basse pression.

Cette disposition permet de supporter l'arbre HP avec un palier à haut produit D.N (où D est le diamètre de l'arbre et N est la vitesse de rotation), et une grande durée de vie, sans complexité du montage et en cohérence avec le schéma fonctionnel général de la machine.

La turbopompe comprend des moyens d'étanchéité dynamique entre l'arbre secondaire constituant le rotor de la pompe basse pression et les organes solidaires de l'arbre principal constituant le rotor de la pompe haute pression qui comprennent des joints fluides, tels que des labyrinthes à léchettes, anneaux ou bagues flottantes.

Selon un mode préférentiel de réalisation, la turbopompe comprend des premier second et troisième ensembles de joints successifs, d'ouverture antagoniste, disposés respectivement entre l'arbre secondaire et le rotor de la pompe haute pression, entre l'arbre secondaire et le redresseur basse pression solidaire du carter, et entre le rotor de la pompe haute pression et le redresseur basse pression.

Les joints fluides présentent un jeu en fonctionnement permettant à la fois de minimiser les débits de fuite du fluide HP vers la sortie de la pompe BP et de régler le débit de fuite vers l'entrée de la pompe BP au strict besoin des paliers disposés entre la partie basse pression et la partie haute pression et de participer ainsi à une gestion optimale des fuites. Le débit ainsi prélevé pour la lubrification de ces paliers dans le mode préférentiel de réalisation est obtenu sans montage ou pièce supplémentaire, en cohérence avec le schéma fonctionnel général de la machine.

Selon une autre caractéristique particulière de l'invention, la turbopompe comprend des moyens d'étanchéité dynamique entre les organes solidaires de l'arbre secondaire faisant partie du rotor de la pompe basse pression et le canal de dérivation qui comprennent des joints fluides tels que des labyrinthes à léchette qui présentent un jeu en fonctionnement minimisant les débits de fluide entre le courant de fluide haute pression de sortie et le courant de fluide basse pression d'entrée.

Selon encore un autre aspect particulier de l'invention, le canal de retour est délimité par une pièce de fonderie intégrée au carter munie de nervures de renforcement, et un joint annulaire amortisseur est interposé entre ladite pièce de fonderie et l'arbre principal.

Cette caractéristique assure une meilleure tenue de l'ensemble tournant et contribue à accroître la durée de vie.

La turbine à gaz d'entraînement de l'arbre principal comprend un carter rattaché par des pions radiaux au carter de la turbopompe.

Le découplage thermique entre la pompe et la turbine est ainsi bien réalisé, sans se faire au détriment de la raideur structurale.

### Brève description des dessins

D'autres caractéristiques et avantages de l'invention ressortiront de la description suivante de modes particuliers de réalisation, donnés à titre d'exemples en référence aux dessins annexés, sur lesquels :
- la figure 1 est une vue en coupe axiale d'une turbopompe à gavage intégré à flux dérivé, selon un mode particulier de réalisation de l'invention,
- la figure 2A est un schéma de principe montrant l'association connue d'une turbopompe et d'une pompe basse pression de gavage disposée à l'entrée de la turbopompe et entraînée par une turbine hydraulique alimentée par un courant de fluide haute pression dérivé du courant de fluide haute pression de sortie de la turbopompe,
- la figure 2B est une vue en demi-coupe axiale d'un exemple d'architecture connue de turbopompe associée à une pompe basse pression de gavage selon le schéma de principe de la figure 2A,
- la figure 3A est un schéma de principe montrant l'association connue d'une turbopompe et d'une pompe basse pression de gavage disposée à l'entrée de la turbopompe et entraînée par une turbine hydraulique alimentée en cascade par l'ensemble du courant de fluide haute pression de sortie de la turbopompe,
- la figure 3B est une vue en demi-coupe axiale d'un premier exemple d'architecture connue de turbopompe associée à une pompe basse pression de gavage de faible puissance selon le schéma de principe de la figure 3A,
- la figure 3C est une vue schématique simplifiée de certains des éléments mis en oeuvre dans l'architecture de la figure 3B,
- la figure 3D est une vue en demi-coupe axiale d'un deuxième exemple d'architecture connue de turbopompe associée à un inducteur basse pression selon le schéma de principe de la figure 3A, avec mise en oeuvre d'une puissance plus élevée que dans le cas de l'architecture des figures 3B et 3C,
- la figure 4 est un schéma de principe montrant l'association connue d'une turbopompe et d'une pompe basse pression de gavage disposée à l'entrée de la turbopompe et entraînée par une turbine à gaz annexe alimentée par un flux de gaz haute pression dérivé du flux de gaz haute pression de sortie de la turbine à gaz principale d'entraînement de la turbopompe,

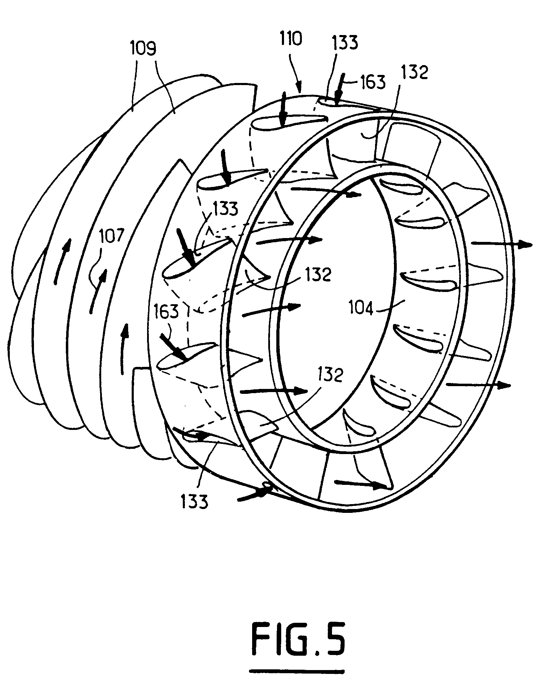

- la figure 5 est une vue en perspective de l'échangeur d'énergie mécanique constitué par une turbine-rouet à aubes creuses, mis en oeuvre dans la turbopompe de la figure 1,
- la figure 6 est une vue de détail montrant, en demi-coupe axiale, un mode particulier d'alimentation d'un palier hydrostatique utilisé dans la turbopompe de la figure 1,
- la figure 7 est une vue de détail montrant, en demi-coupe axiale, un mode particulier de recirculation de fluide au niveau d'un palier de turbine de la turbopompe de la figure 1,
- la figure 8 est une vue de détail montrant, en demi-coupe axiale, un exemple de volute tournante selon un mode particulier de réalisation de la turbopompe de la figure 1,
- la figure 9 est une vue de détail montrant, en demi-coupe axiale, un exemple de réalisation d'étanchéités dynamiques entre les parties basse pression et haute pression selon un mode paticulier de réalisation de la turbopompe de la figure 1, et
- la figure 10 est une vue de détail montrant, en demi-coupe axiale un exemple de fond arrière de la pompe principale haute pression de la turbopompe de la figure 1.

### Description détaillée de modes particuliers de réalisation

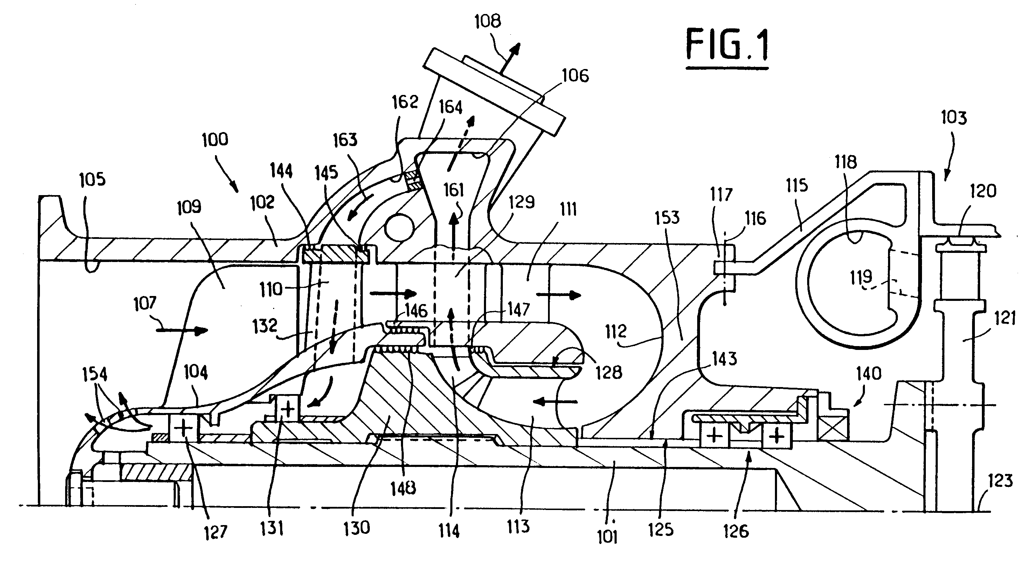

La figure 1 représente la vue d'ensemble d'une turbopompe 100 à gavage intégré à flux dérivé, conforme à la présente invention, qui est plus particulièrement destinée à assurer la pressurisation des ergols d'un moteur-fusée.

Selon un aspect essentiel de l'invention, on trouve à l'intérieur d'un même carter 102 les éléments actifs d'une pompe HP entraînés par un arbre principal 101 à partir d'une turbine à gaz extérieure 103, et les éléments actifs d'une pompe BP solidaires d'un arbre secondaire 104 coaxial à l'arbre principal 101, l'arbre secondaire 104 étant entraîné lui-même directement par le rouet BP 110 muni d'aubes creuses incurvées parcourues par un courant dérivé 163 constituant une faible fraction du courant de fluide HP de sortie 161 de la pompe HP. Le rouet HP 114 de la pompe HP monté sur l'arbre principal 101, est intégré à l'intérieur du rouet BP 110 afin de permettre au courant centrifuge de fluide HP 161 fourni par le rouet HP 114 aux pression et débit spécifiés pour l'ensemble de la machine de passer par un canal de refoulement 106 en définissant un courant de sortie 108 vers des organes d'utilisation, tout en permettant à un courant dérivé 163 de revenir par un canal de dérivation 162, de façon centripète à l'intérieur 133 d'aubes creuses incurvées 132 faisant partie du rouet BP 110 (figure 1). L'entrée du canal de dérivation 162, qui prend naissance dans le canal de refoulement 106 est avantageusement munie d'un diaphragme 164.

Le flux dérivé 163, après avoir circulé à l'intérieur des aubes creuses incurvées 132, débouche dans un espace situé entre le rotor haute pression 130 entraînant le rouet HP 114 et le rotor secondaire BP 104. Ce flux dérivé est défléchi par le rotor HP 130 et renvoyé vers l'entrée BP 105 à travers les paliers 131 et 127 qu'il lubrifie, et des orifices 154 ménagés dans le rotor secondaire 104.

Le courant de fluide HP issu du rouet HP 114 traverse des aubes creuses fixes 129 qui font partie d'un redresseur 111 dont la fonction sera explicitée plus loin, avant de pénétrer dans le canal de refoulement 106.

Le rouet BP 110 disposé au voisinage de l'entrée 105 du liquide 107 exerce une fonction de gavage du rouet HP 114, monté en cascade par rapport au rouet BP 110, en permettant l'application en entrée du rouet HP 114, d'un courant de fluide à moyenne pression (MP) qui est à même d'éviter les phénomènes de cavitation dans le rouet HP 114 aux grandes vitesses de rotation.

Le niveau élevé de performances dû à la présence d'un étage surpresseur d'entrée constitué par la pompe BP ne se fait pas au détriment de la compacité, dans la mesure où le corps de pompe BP est intégré au corps de pompe HP, les pompes BP et HP étant toutes deux coaxiales à la machine.

Comme cela a été indiqué plus haut, une turbine hydraulique d'entraînement du rouet BP 110 est combinée à un étage de la pompe BP. L'intégration d'une turbine hydraulique motrice dans le rouet de gavage BP 110 contribue à accroître la compacité de l'ensemble.

La pompe BP comprend un rotor constitué par l'arbre secondaire 104, qui porte en entrée un inducteur BP 109 constituant un premier étage d'aspiration avec un large diamètre d'entrée favorisant une capacité d'aspiration élevée. Au moins un étage de la pompe BP constituant le rouet BP 110 est muni de flasques et d'aubages creux 132 pour permettre un fonctionnement en turbine hydraulique par circulation du courant de fluide HP dérivé 163 à travers l'intérieur 133 des aubages creux 132.

Dans le cas du mode de réalisation de la figure 1, la pompe BP ne comprend qu'un inducteur BP 109 et un rouet BP 110, constituant également une turbine hydraulique, mais il est possible de réaliser une pompe BP avec un plus grand nombre d'étages disposés en amont du rouet caréné BP 110 assurant la fonction de turbine hydraulique.

La liaison entre la sortie de la pompe BP et l'entrée de la pompe HP comprend un redresseur 111, monté sur le carter 102 de l'ensemble des pompes BP et HP, qui permet de redresser l'écoulement hydraulique sur l'axe de la machine et d'éviter toute prérotation du fluide à l'entrée du rouet HP 114, en association avec un canal de retour 112 qui dévie de 180° le flux de fluide moyenne pression issu du redresseur 111 et ramène celui-ci parallèlement à l'axe de la turbopompe vers le rouet HP 114.

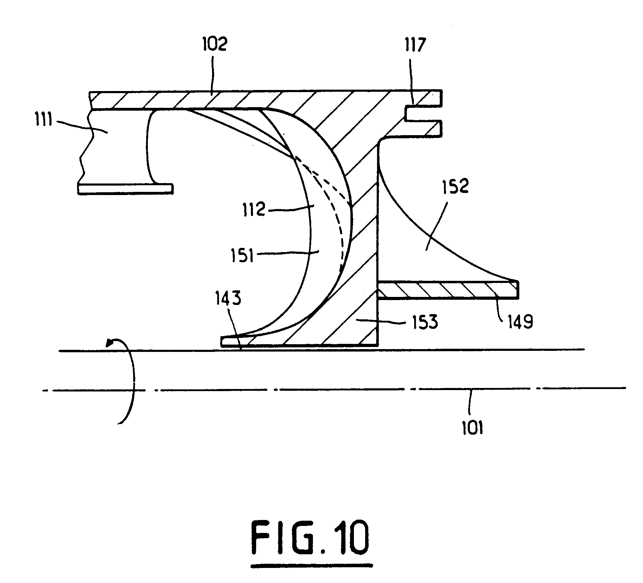

La figure 10 montre de façon plus particulière l'ensemble du fond arrière 153 de la pompe avec le canal de retour 112. Le canal de retour 112 est obtenu par des formes simples, ouvertes, à partir d'une pièce de fonderie 153 munie de nervures ou ailettes 151, 152 et intégrée au carter 102 de la pompe, d'une manière qui augmente la raideur structurale tout en réservant un emplacement 143 pour la mise en place d'un joint annulaire amortisseur 125 entre l'arbre 101 et le canal de retour 112. Cette caractéristique permet une meilleure tenue de l'ensemble tournant et contribue à une durée de vie élevée.

L'ensemble du fond arrière 153 permet de réserver, sur la paroi externe du canal de retour 112, un logement 149 pour un palier 126 et son système d'étanchéité 140 (figure 1), destinés au montage de l'arbre principal 101 dans sa partie arrière solidaire de la turbine à gaz 103.

Le carter 120 de la turbine à gaz 103 peut être fixé à l'aide de pions radiaux 116 par une extrémité 115 engagée directement dans des brides 117 formées dans le fond arrière 153 (figure 1).

Les mesures indiquées ci-dessus permettent de bien réaliser le découplage thermique entre la pompe et la turbine sans se faire au détriment de la raideur structurale.

Le rotor 130 de la pompe HP, entraîné directement par l'arbre central principal 101, est constitué d'un inducteur 113, qui peut être facultatif, et d'un rouet 114 munis de flasques. Le rouet HP 114 peut être axial, hélicocentrifuge ou centrifuge selon sa vitesse spécifique.

La pompe HP renvoie l'écoulement centrifuge à haute pression 161 à travers les aubes creuses fixes 129 de l'inducteur 111 vers le canal de refoulement 106, une partie 163 du courant 161 étant renvoyée par le canal de dérivation 162 vers l'intérieur des aubes creuses incurvées 132 du rouet BP 110, ce qui produit un couple moteur pour le rouet BP 110, ce couple moteur résultant de la variation de la quantité de mouvement.

Les aubes creuses 132, qui sont traversées par une faible fraction du débit haute pression, sont ainsi motrices par l'extérieur et réceptrices par l'intérieur, la puissance transmise entraînant la pompe BP.

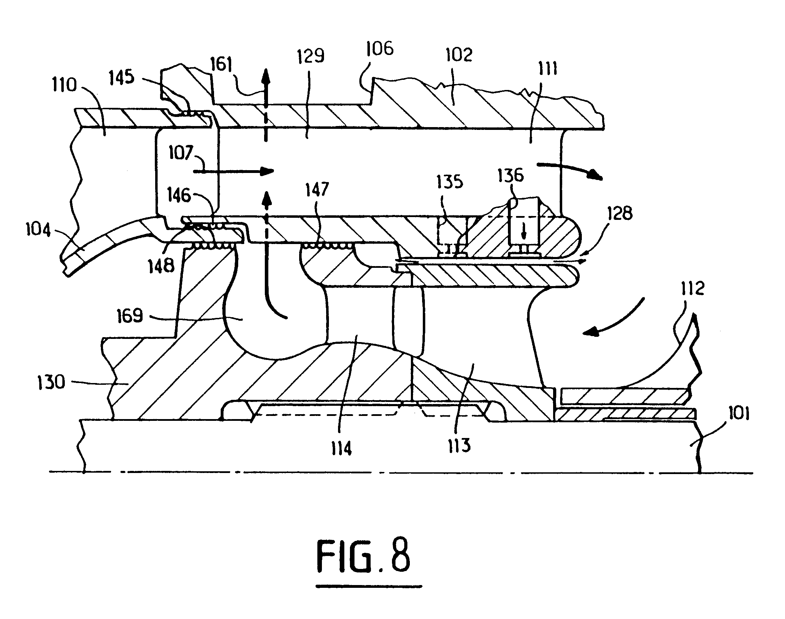

L'utilisation de ce principe aux grandes vitesses spécifiques pour le rouet HP 114 conduit à l'apparition d'une volute tournante 169 en aval de ce rouet, avant passage du débit dans les aubes creuses 132 (figure 8).

Le canal de refoulement 106 peut lui-même être constitué d'une volute ou d'un tore.

On décrira maintenant de façon plus détaillée des exemples particuliers de montage de l'arbre principal 101 et de l'arbre secondaire 104 à l'aide de paliers de divers types.

L'arbre principal à grande vitesse 101 est monté, d'une part à l'aide d'un palier hydrostatique 128, disposé entre le redresseur BP 111 solidaire du carter 102 et l'inducteur HP 113, solidaire de l'arbre principal 101, et d'autre part à l'aide d'un palier 126 adapté aux grandes vitesses tel qu'un doublet de roulements à billes, monté dans le fond arrière 153 du canal de retour 112.

L'arbre secondaire basse pression 104 est lui-même monté sur l'arbre principal 101 par l'intermédiaire d'un roulement à rouleaux 131 et d'un doublet de roulements à billes 127 du côté tourné vers la turbine à gaz 103.

Cette disposition à quatre paliers permet d'obtenir une vitesse de rotation élevée pour l'arbre principal 101 et la rotation libre de l'ensemble basse pression entraîné par la turbine hydraulique.

On notera que les paliers placés entre la pompe BP et la pompe HP tournent à une vitesse relative faible qui correspond à la différence entre les vitesses de rotation de l'arbre principal 101 et de l'arbre secondaire 104, de sorte que l'usure de ces paliers est relativement lente.

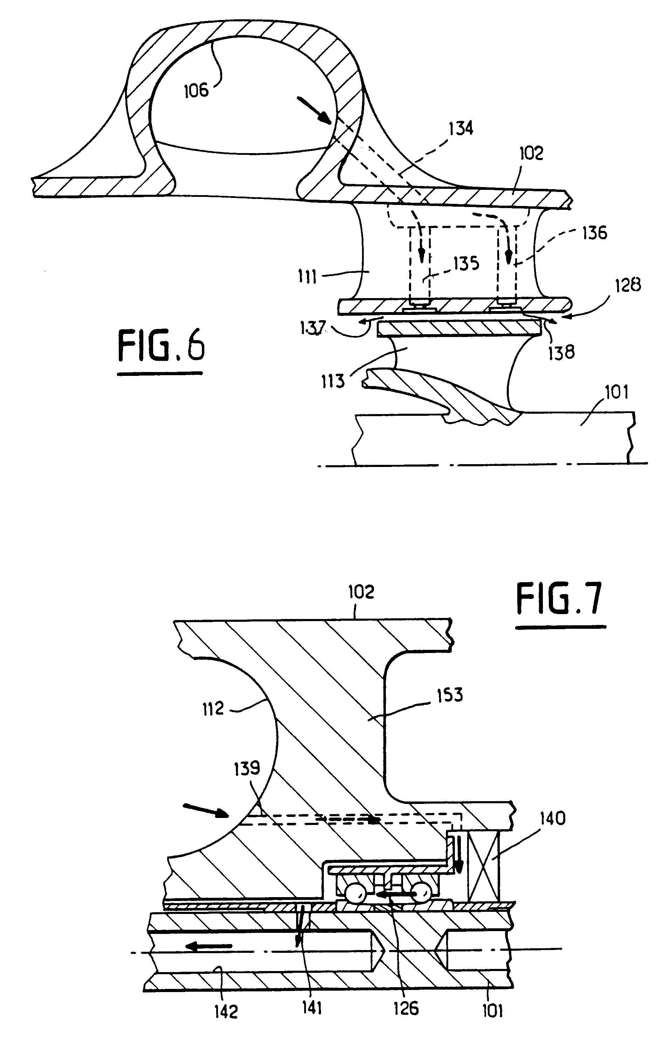

Comme on peut le voir sur les figures 6 et 8, le palier hydrostatique 128 utilise une partie du débit de la pompe HP en prélevant, par un canal de recirculation 134, 135, 136 direct et court intégré au carter, une partie du fluide HP 108 présent dans le canal de refoulement 106.

L'évacuation de ce faible débit se fait à moyenne pression (MP) d'une part (courant 137) à l'entrée de la pompe HP et d'autre part (courant 138) à la sortie de la pompe BP, sans organe supplémentaire.

Cette disposition permet de supporter l'arbre principal 101 avec un palier à grande durée de vie et à haut produit D.N., où D est le diamètre de l'arbre 101 et N est la vitesse de rotation, en cohérence avec le schéma fonctionnel général de la machine.

La figure 7 montre un exemple de réalisation du palier 126 de support de l'arbre principal 101 du côté de la turbine à gaz 103. On voit que ce palier 126, réalisé à titre d'exemple par un doublet de roulements à billes, est lubrifié et refroidi par un débit recirculé prélevé en sortie du redresseur 111 dans une zone à moyenne pression à travers la paroi du fond arrière 153 délimitant le canal de retour 112, par un canal de recirculation 139 constituant un captage proche du palier 126. Le débit prélevé et servant à la lubrification du palier 126 est rejeté en un point de la machine à faible pression, comme par exemple l'entrée de la pompe BP par un circuit comprenant un passage 141, un canal 142 inclus dans l'arbre principal 101 et coaxial avec lui (figure 7) et un passage de sorti 154 à travers le rotor secondaire 104 (figure 1). Une telle disposition évite toute tuyauterie externe, minimise les pertes en ligne et assure des conditions fonctionnelles en débit, surpression, température, optimales pour le palier 126 supportant l'arbre à grande vitesse 101.

On notera que le doublet à roulements à billes 126 représenté sur la figure 7 peut être remplacé par un palier adapté aux grandes vitesses qui soit d'un autre type. Le palier 126 peut ainsi être un palier fluide ou à foils alimenté en fluide moyenne pression par un canal de recirculation tout à fait analogue au canal 139 de la figure 7.

De façon similaire, le palier 126 peut encore être constitué par un palier magnétique actif refroidi par un faible débit de fluide à moyenne pression prélevé par le canal de recirculation 139.

Le joint 140 permet dans tous les cas d'assurer une étanchéité par rapport à la zone dans laquelle est située la turbine à gaz 103.

La turbine à gaz 103 peut comprendre un ou plusieurs étages 121, 122 montés directement à l'extrémité de l'arbre principal 101 et fournissant l'ensemble de la puissance nécessaire aux pompes HP et BP.

Le montage des roues de turbine 121, 122 peut être réalisé par un tirant long 123 coaxial à l'arbre principal 101 et une pièce d'appui élastique limitant les dilatations différentielles entre les pièces. La turbine 103 comprend un carter 120 dans lequel sont intégrés un canal 118 d'amenée des gaz chauds et un espace annulaire 119 d'application des gaz chauds sur les aubes des roues de turbine 121, 122. Comme cela a déjà été mentionné, une extrémité du carter 120 de la turbine 103 peut être reliée au carter 102 des pompes HP et BP par une liaison comprenant des pions radiaux 116.

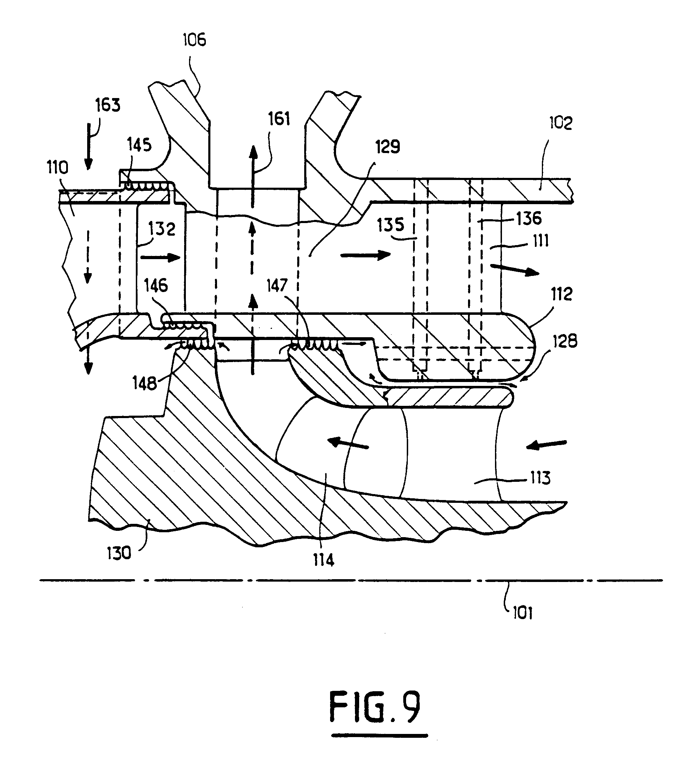

Les figures 8 et 9 montrent des exemples d'étanchéités dynamiques réalisées entre l'arbre secondaire 104 constituant le rotor de la pompe BP et les organes 130, 114 solidaires de l'arbre principal 101 constituant le rotor de la pompe HP. Des joints fluides 147, 148 tels que des labyrinthes à léchettes, des anneaux ou des bagues flottantes sont ainsi disposés entre la partie 129 du redresseur 111 ou le rotor 104 et le support 130 du rouet HP 114. Un joint fluide 146 est en outre disposé entre le rotor secondaire 104 et l'extrémité amont du redresseur BP 111 située près du rouet BP 110, avec une ouverture antagoniste de celle des joints fluides 147, 148.

Des moyens d'étanchéité dynamique 144, 145 sont de plus disposés entre le rouet BP 110 monté sur le rotor secondaire 104 et le canal de dérivation 162 (figures 1, 8 et 9). Ces moyens d'étanchéité dynamique comprennent de la même façon des joints fluides tels que des labyrinthes à léchettes qui présentent un jeu en fonctionnement minimisant les débits de fluide entre le courant de fluide HP dérivé 163 et le courant de fluide BP d'entrée 107.

Les jeux en fonctionnement des différents joints fluides permettent en outre de régler le débit de fuite vers l'entrée de la pompe BP au strict besoin des paliers basse pression/haute pression et de participer ainsi à une gestion optimale des fuites. Le débit ainsi prélevé pour la lubrification de ces paliers dans le mode préférentiel de réalisation est obtenu sans montage ou pièce supplémentaire.

## Revendications

1. Turbopompe à gavage intégré en flux dérivé, pour la pressurisation d'un fluide, comprenant à l'intérieur d'un même carter (102), un arbre principal (101) entraîné par une turbine (103) et portant un rouet haute pression (114), un arbre secondaire (104) coaxial à l'arbre principal (101), au moins un inducteur basse pression (109) monté dans le carter (102) sur l'arbre secondaire (101) au voisinage d'une arrivée (105) de fluide basse pression (107), au moins un rouet basse pression (110) monté sur l'arbre secondaire (104) en aval de l'inducteur basse pression (109), un redresseur basse pression (129, 111) solidaire du carter (102) et disposé en aval du rouet basse pression (110), un canal de retour (112), caractérisé en ce que le redresseur basse pression (111) est agencé de manière à ramener l'écoulement du fluide moyenne pression créé parallèlement à l'axe de la turbopompe, en ce que le canal de retour (112) est agencé pour dévier de 180° le flux de fluide moyenne pression issu du redresseur (129, 111) et ramener ce flux parallèlement à l'axe de la turbopompe vers le rouet haute pression (114) monté sur l'arbre principal (101) à l'intérieur de l'arbre secondaire (104) de manière à envoyer l'ensemble de l'écoulement centrifuge haute pression (161) formé par le rouet haute pression (114) vers l'intérieur (160) d'aubes creuses fixes (129) faisant partie dudit redresseur (129, 111) en direction d'un canal de refoulement (106), solidaire du carter (102) recueillant le fluide haute pression (108) après son passage à travers lesdites aubes creuses fixes (129), et en ce qu'un canal de dérivation (162) prend naissance dans ledit canal de refoulement (106) pour appliquer un écoulement centripète haute pression à l'intérieur d'aubes creuses incurvées (132) faisant partie du rouet basse pression (110), pour créer un couple moteur sur le rouet basse pression (110), le rouet haute pression (114) constituant une pompe haute pression couplée à une pompe basse pression de gavage constituée par l'inducteur basse pression (109) et le rouet basse pression (110) et constituant un ensemble unique.

2. Turbopompe selon la revendication 1, caractérisée en ce qu'elle comprend en outre un inducteur haute pression (113) monté sur l'arbre principal (101) entre le canal de retour (112) et le rouet haute pression (114).

3. Turbopompe selon la revendication 1 ou la revendication 2, caractérisée en ce que la pompe basse pression de gavage définit un courant de fluide moyenne pression essentiellement parallèle à l'axe de la turbopompe tandis que la pompe haute pression est agencée de telle manière que le rouet haute pression (114) refoule le fluide haute pression (108), vers le canal de refoulement (106), dans un plan approximativement perpendiculaire à l'axe de la turbopompe.

4. Turbopompe selon la revendication 2, caractérisée en ce que l'arbre principal (101) entraîné à grande vitesse par la turbine (103) est monté par rapport au carter (102) d'une part à l'aide d'un palier hydrostatique (128) disposé entre le redresseur basse pression (111) et l'inducteur haute pression (113) ou le rouet haute pression (114) et d'autre part un palier (126) adapté aux grandes vitesses monté dans le fond arrière du canal de retour (112).

5. Turbopompe selon la revendication 4, caractérisée en ce que l'arbre secondaire (104) est monté sur l'arbre principal (101) par l'intermédiaire d'un roulement à rouleaux (127) et de roulements à billes (131).

6. Turbopompe selon la revendication 4 ou la revendication 5, caractérisée en ce que ledit palier (126) monté dans le fond arrière du canal de retour (112) est un palier à billes lubrifié et refroidi par un faible débit de fluide moyenne pression prélevé en sortie du redresseur basse pression (111) par un canal de recirculation (139) de faible longueur ménagé dans la paroi du canal de retour (112).

7. Turbopompe selon la revendication 4 ou la revendication 5, caractérisée en ce que ledit palier (126) monté dans le fond arrière du canal de retour (112) est un palier fluide ou à foils alimenté par un faible débit de fluide moyenne pression prélevé en sortie du redresseur basse pression (111) par un canal de recirculation (139) de faible longueur ménagé dans la paroi du canal de retour (112).

8. Turbopompe selon la revendication 4 ou la revendication 5, caractérisée en ce que ledit palier (126) monté dans le fond arrière du canal de retour (112) est un palier magnétique actif refroidi par un faible débit de fluide moyenne pression prélevé en sortie du redresseur basse pression (111) par un canal de recirculation (139) de faible longueur ménagé dans la paroi du canal de retour (112).

9. Turbopompe selon l'une quelconque des revendications 6 à 8, caractérisée en ce que le faible débit de fluide moyenne pression prélevé à travers ledit canal de recirculation (139) est rejeté en un point de la turbopompe à faible pression, tel que l'entrée (105) de la pompe basse pression, par un canal (142) inclus dans l'arbre principal (101) et coaxial à celui-ci.

10. Turbopompe selon l'une quelconque des revendications 4 à 9, caractérisée en ce que le palier hydrostatique (128) disposé entre le redresseur basse pression (111) et l'inducteur haute pression (113) ou le rouet haute pression (114) est alimenté à l'aide d'une faible partie du fluide de sortie haute pression (108) présent dans le canal de refoulement (106), par l'intermédiaire d'un canal de recirculation interne court (134) intégré au carter (102) et de canaux (135, 136) ménagés dans le redresseur basse pression (111), l'évacuation de cette faible partie de fluide recirculée dans le palier hydrostatique (128) s'effectuant directement à l'entrée de la pompe haute pression et à la sortie de la pompe basse pression.

11. Turbopompe selon l'une quelconque des revendications 1 à 10, caractérisée en ce qu'elle comprend des moyens d'étanchéité dynamique entre l'arbre secondaire (104) constituant le rotor de la pompe basse pression et les organes (130, 114) solidaires de l'arbre principal (101) constituant le rotor de la pompe haute pression qui comprennent des joints fluides (147, 148), tels que des labyrinthes à léchettes, anneaux ou bagues flottantes.

12. Turbopompe selon la revendication 11, caractérisée en ce qu'elle comprend des premier (148) second (146) et troisième (147) ensembles de joints successifs, d'ouverture antagoniste, disposés respectivement entre l'arbre secondaire (104) et le rotor (130) de la pompe haute pression, entre l'arbre secondaire (104) et le redresseur basse pression (111) solidaire du carter (102), et entre le rotor (130) de la pompe haute pression et le redresseur basse pression (129, 111).

13. Turbopompe selon l'une quelconque desrevendications 1 à 12, caractérisée en ce qu'elle comprend des moyens d'étanchéité dynamique (144, 145) entre les organes solidaires de l'arbre secondaire (104) faisant partie du rotor de la pompe basse pression et le canal de dérivation (162) qui comprennent des joints fluides tels que des labyrinthes à léchette qui présentent un jeu en fonctionnement minimisant les débits de fluide entre le courant de fluide haute pression (163) de dérivation et le courant de fluide basse pression d'entrée (107).

14. Turbopompe selon l'une quelconque des revendications 1 à 13, caractérisée en ce que l'arbre principal (101) porte un rotor (130) solidaire du rouet haute pression (114) qui définit avec l'arbre secondaire (104) un espace de réception du flux dérivé (163) ayant traversé les aubes creuses incurvées (132) et renvoie ce flux dérivé vers l'arrivée (105) de fluide basse pression à travers des paliers (131, 127) de support de l'arbre secondaire (104) par rapport à l'arbre principal (101) et des orifices de sortie (154) ménagés dans l'arbre secondaire (104).

15. Turbopompe selon la revendication 4 ou la revendication 5, caractérisée en ce que le canal de retour (112) est délimité par une pièce de fonderie (153) et intégrée au carter (102) munie de nervures de renforcement (151, 152), et en ce qu'un joint annulaire amortisseur (143) est interposé entre ladite pièce de fonderie (153) et l'arbre principal (101).

16. Turbopompe selon l'une quelconque des revendications 1 à 15, caractérisée en ce que la turbine à gaz (103) d'entraînement de l'arbre principal (101) comprend un carter (120) rattaché par des pions radiaux (116) au carter (102) de la turbopompe.

## Claims

1. Shunt flow turbopump with integrated boosting for pressurizing a fluid, comprising within a single casing (102), a main shaft (101) driven by a turbine (103) and carrying a high pressure impeller (114), a secondary shaft (104) coaxial with the main shaft (101), at least one low pressure inducer (109) mounted inside the casing (102) on the secondary shaft (101) in the vicinity of an inlet (105) for low pressure fluid (107), at least one low pressure impeller (110) mounted on the secondary shaft (104) downstream from the low pressure inducer (109), a low pressure baffle (129, 111) secured to the casing (102) and disposed downstream from the low pressure impeller (110), a return channel (112), characterized in that the low pressure baffle (111) is so arranged as to restore the medium pressure fluid flow created, to a direction parallel to the axis of the turbopump, in that the return channel (112) is so arranged as to deflect the medium pressure fluid flow from the baffle through 180° and to return said flow parallel to the axis of the turbopump towards the high pressure impeller (114) mounted on the main shaft (101) inside the secondary shaft (104) in such a manner as to deliver the entire high pressure centrifugal flow (161) formed by the high pressure impeller (114) through the insides (160) of fixed hollow blades (129) forming a part of said baffle (129, 111) towards a delivery channel (106) secured to the casing (102) collecting the high pressure fluid (108) after it has passed through said fixed hollow blades (129), and in that a shunt channel (162) taken from said delivery channel (106) to apply a high pressure centripetal flow through the insides of curved hollow blades (132) forming part of the low pressure impeller (110), thereby generating a driving torque for the low pressure impeller (110), the high pressure impeller (114) constituting a high pressure pump coupled to a low pressure boost pump constituted by the low pressure inducer (109) and the low pressure impeller (110) and constituting a unitary assembly.

2. Turbopump according to claim 1, characterized in that it further includes a high pressure inducer (113) mounted on the main shaft (101) between the return channel (112) and the high pressure impeller (114).

3. Turbopump according to claim 1 or claim 2, characterized in that the low pressure boost pump defines a medium pressure fluid flow which is essentially parallel to the axis of the turbopump, while the high pressure pump is arranged in such a manner that the high pressure impeller (114) delivers the high pressure fluid (108), towards the delivery channel (106), in a plane that is essentially perpendicular to the axis of the turbopump.

4. Turbopump according to claim 2, characterized in that the main shaft (101) driven at high speed by the turbine (103) is mounted relative to the casing (102) firstly by means of a hydrostatic bearing (128) disposed between the low pressure baffle (111) and the high pressure inducer (113) or the high pressure impeller (114), and secondly by a bearing (126) suitable for high speeds and mounted in the backplate of the return channel (112).

5. Turbopump according to claim 4, characterized in that the secondary shaft (104) is mounted on the main shaft (101) via a roller bearing (127) and a ball bearing (131).

6. Turbopump according to claim 4 or claim 5, characterized in that said bearing (126) mounted in the backplate of the return channel (112) is a ball bearing that is lubricated and cooled by a low flow rate of medium pressure fluid taken from the outlet of the low pressure baffle (111) via a short recirculation channel (139) in the wall of the return channel (112).

7. Turbopump according to claim 4 or claim 5, characterized in that said bearing (126) mounted in the backplate of the return channel (112) is a fluid bearing or a foil bearing fed with a small flow rate of medium pressure fluid taken from the outlet of the low pressure baffle (111) by a short recirculation channel (139) formed in the wall of the return channel (112).

8. Turbopump according to claim 4 or claim 5, characterized in that said bearing (126) mounted in the backplate of the return channel (112) is an active magnetic bearing cooled by a low flow rate of medium pressure fluid taken from the outlet of the low pressure baffle (111) by a short recirculation channel (139) formed in the wall of the return channel (112).

9. Turbopump according to anyone of claim 6 to 8, characterized in that the low flow rate of medium pressure fluid taken via said recirculation channel (139) is dumped at a low pressure point of the turbopump, such as the inlet (105) of the low pressure pump, via a channel (142) included in the main shaft (101) and coaxial therewith.

10. Turbopump according to anyone of claims 4 to 9, characterized in that the hydrostatic bearing (128) disposed between the low pressure baffle (111) and the high pressure inducer (113) or the high pressure impeller (114) is fed by means of a small portion of the high pressure outlet fluid (108) present in the delivery channel (106) via a short internal recirculation channel (134) formed in the casing (102) and via channels (135,136) formed in the low pressure baffle (111), said small portion of fluid recirculated through the hydrostatic bearing (128) being dumped directly at the inlet of the high pressure pump and at the outlet of the low pressure pump.

11. Turbopump according to anyone of claims 1 to 10, characterized in that it comprises means between the secondary shaft (104) constituting the rotor of the low pressure pump and the members (130, 114) secured to the main shaft (101) constituting the rotor of the high pressure pump, which means comprise fluid seals (147, 148) such as wiper labyrinths, rings, or floating rings.

12. Turbopump according to claim 11, characterized in that it comprises first (148), second (146), and third (147) successive sets of oppositely-directed seals disposed respectively between the secondary shaft (104) and the rotor (130) of the high pressure pump, between the secondary shaft (104) and the low pressure baffle (111), secured to the casing (102), and between the rotor (130) of the high pressure pump and the low pressure baffle (129, 111).

13. Turbopump according to anyone of claims 1 to 12, characterized in that it comprises dynamic sealing means (144, 145) between the members secured to the secondary shaft (104) forming part of the rotor of the low pressure pump and the shunt channel (162) which include fluid seals such as wiper labyrinths leaving clearance in operation that minimizes the fluid flow rates between the shunt high pressure fluid flow (163) and the low pressure fluid flow at the inlet (107).

14. Turbopump according to any one of claims 1 to 13, characterized in that the main shaft (101) carries a rotor (130) secured to the high pressure impeller (114) which cooperates with the secondary shaft (104) to define a space for receiving the shunt flow (163) after it has passed through the curved hollow blades (132), and which directs this shunt flow towards the low pressure fluid inlet (105) via bearings (131, 127) supporting the secondary shaft (104) relative to the main shaft (101) and via outlet orifices (154) formed through the secondary shaft (104).

15. Turbopump according to claim 4 or claim 5, characterized in that the return channel (112), is delimited by a casting (153) integrated in the casing (102) and provided with reinforcing ribs (151, 152) and in that a shock absorbing annular gasket (143) is interposed between said casting (153) and the main shaft (101).

16. Turbopump according to any one of claims 1 to 15, characterized in that the gas turbine (103) driving the main shaft (101) includes a casing (120) connected via radial studs (116), to the casing (102) of the turbopump.

## Patentansprüche

1. Turbopumpe mit integrierter umgeleiteter Durchströmungsaufladung, für das Unterdrucksetzen eines Fluids, mit, im Inneren eines selben Gehäuses (102), einer Hauptwelle (101), die von einer Turbine (103) angetrieben wird und ein Hochdruckflügelrad (114) trägt, einer zweiten Welle (104), die koaxial zur Hauptwelle (101) verläuft, wenigstens einem Niederdruckinduktor (109), der in dem Gehäuse (102) auf der zweiten Welle (104) in der Nähe eines Eintritts (105) von Niederdruckfluid (107) angebracht ist, wenigstens einem Niederdruckflügelrad (110), das auf der zweiten Welle (104) stromab des Niederdruckinduktors (109) angebracht ist, einem Niederdruckleitapparat (129, 111), der mit dem Gehäuse (102) verbunden ist und stromab des Niederdruckflügelrads (110) angeordnet ist, einem Rücklaufkanal (112), dadurch gekennzeichnet, daß der Niederdruckleitapparat (111) derart angeordnet ist, daß er den Fluß des Mitteldruckfluids, das parallel zur Achse der Turbopumpe erzeugt wird, zurückbringt, daß der Rücklaufkanal (112) so angeordnet ist, daß er den Mitteldruckfluidfluß, der von dem Leiterapparat (129, 111) ausgesendet wird, um 180° umlenkt und diesen Fluß parallel zur Achse der Turbopumpe zum Hochdruckflügelrad (114) bringt, das auf der Hauptwelle (101) im Inneren der zweiten Welle (104) derart angeordnet ist, daß es den gesamten hochdruckzentrifugalen Fluß (161), der von dem Hochdruckflügelrad (114) erzeugt wird, nach dem Inneren (160) von festen hohlen Schaufeln (129) schickt, die einen Teil des Leitapparats (129, 111) in Richtung eines Rückbringkanals (106) bilden, verbunden mit dem Gehäuse (102), wobei sie das Hochdruckfluid (108) nach dessen Durchtritt durch die ersten hohlen Schaufeln (129) sammeln, und daß ein Umleitungskanal (162) in dem Rücklaufkanal (106) beginnt, um ein zentripetales Fließen von hohem Druck im Inneren von gekrümmten hohlen Schaufeln (132) aufzubringen, die Teil des Niederdruckflügelrads (110) sind, um ein Motormoment oder Antriebsmoment auf das Niederdruckflügelrad (110) aufzubringen, wobei das Hochdruckflügelrad (114) eine Hochdruckpumpe bildet, die mit einer Niederdruckaufladungspumpe gekoppelt ist, die von dem Niederdruckinduktor (109) und dem Niederdruckflügelrad (110) gebildet wird und eine einzige Anordnung bilden.

2. Turbopumpe nach Anspruch 1, dadurch gekennzeichnet, daß sie weiterhin einen Hochdruckinduktor (113) aufweist, der auf der Hauptwelle (101) zwischen dem Rücklaufkanal (112) und dem Hochdruckflügelrad (114) angeordnet ist.

3. Turbopumpe nach Anspruch 1 oder 2, dadurch gekennzeichnet, daß die Niederdruckaufladepumpe einen Mitteldruckfluidstrom definiert, der im wesentlichen parallel zur Achse der Turbopumpe läuft, während die Hochdruckpumpe derart angeordnet ist, daß das Hochdruckflügelrad (114) das Hochdruckfluid (108) zum Rückführkanal (106) in einer Ebene ungefähr senkrecht zur Achse der Turbopumpe zurückführt.

4. Turbopumpe nach Anspruch 2, dadurch gekennzeichnet, daß die Hauptwelle (101), die durch die Turbine (103) auf eine hohe Geschwindigkeit angetrieben wird, bezüglich des Gehäuses (102) einerseits mit Hilfe eines hydrostatischen Lagers (128), das zwischen dem Niederdruckleitapparat (111) und dem Hochdruckinduktor (113) oder dem Hochdruckflügelrad (114) angeordnet ist, und andererseits eines Lagers (126), das für hohe Geschwindigkeiten geeignet ist, angebracht ist, welches im hinteren Boden des Rücklaufkanals (112) angeordnet ist.

5. Turbopumpe nach Anspruch 4, dadurch gekennzeichnet, daß die zweite Welle (104) auf der Hauptwelle (101) mittels eines Rollenlagers (127) und Kugellagern (131) montiert ist.

6. Turbopumpe nach Anspruch 4 oder 5, dadurch gekennzeichnet, daß das Lager (126), das im hinteren Boden des Rücklaufkanals (112) montiert ist, ein Kugellager ist, das geschmiert und gekühlt wird durch eine schwache Mitteldruckfluidrate, die am Ausgang des Niederdruckleitapparates (111) durch einen Rückspeisekanal (139) von geringer Länge abgegriffen wird, der in der Seitenwand des Rücklaufkanals (112) ausgebildet ist.

7. Turbopumpe nach Anspruch 4 oder 5, dadurch gekennzeichnet, daß das Lager (126), das im hinteren Boden des Rücklaufkanals (112) montiert ist, ein Fluidlager oder ein Folienlager ist, das von einer geringen Mitteldruckfluidrate gespeist wird, die am Ausgang des Niederdruckleitapparates (111) durch einen Rückspeisekanal (139) von geringer Länge abgegriffen wird, der in der Seitenwand des Rücklaufkanals (112) ausgebildet ist.

8. Turbopumpe nach Anspruch 4 oder 5, dadurch gekennzeichnet, daß das Lager (126), das im hinteren Boden des Rücklaufkanals (112) angebracht ist, ein aktives Magnetlager ist, das durch eine geringe Mitteldruckfluidrate gekühlt wird, die am Ausgang des Niederdruckleitapparates (111) durch einen Rückspeisekanal (139) von geringer Länge abgegriffen wird, der in der Seitenwand des Rücklaufkanals (112) ausgebildet ist.

9. Turbopumpe nach einem der Ansprüche 6 bis 8, dadurch gekennzeichnet, daß die geringe Mitteldruckfluidrate, die über den Rückspeisekanal (139) abgegriffen wird, in einem Punkt der Turbopumpe mit schwachem Druck zurückgeworfen wird, wie beispielsweise dem Eingang (105) der Niederdruckpumpe, durch einen Kanal (142), der in der Hauptwelle (101) enthalten ist und koaxial zu diesem verläuft.

10. Turbopumpe nach einem der Ansprüche 4 bis 9, dadurch gekennzeichnet, daß das hydrostatische Lager (128), das zwischen dem Niederdruckleitapparat (111) und dem Hochdruckinduktor (113) oder dem Hochdruckflügelrad (114) angeordnet ist, mit Hilfe eines geringen Teils des Hochdruckaustrittsfluids (108) gespeist wird, das in dem Rückführkanal (106) vorhanden ist, mittels eines kurzen inneren Rückspeisekanals (134), der im Gehäuse (102) integriert ist, und mit Hilfe von Kanälen (135, 136), die in dem Niederdruckleitapparat (111) ausgebildet sind, wobei das Austreten dieses geringen Teils an rückgespeistem Fluid in dem hydrostatischen Lager (128) direkt am Eingang der Hochdruckpumpe und am Ausgang der Niederdruckpumpe erfolgt.

11. Turbopumpe nach einem der Ansprüche 1 bis 10, dadurch gekennzeichnet, daß sie dynamische Dichtungseinrichtungen zwischen der zweiten Welle (104), die den Rotor der Niederdruckpumpe bildet, und den Organen (130, 114) bildet, die mit der Hauptwelle (101), die den Rotor der Hochdruckpumpe bildet, verbunden sind, welche Flüssigkeitsdichtungen (147, 148), wie Scheibchen-Labyrinthe, Reifen oder schwimmende Ringe aufweisen.

12. Turbopumpe nach Anspruch 11, dadurch gekennzeichnet, daß sie erste (148), zweite (146) und dritte (147) Anordnungen von aufeinanderfolgenden Dichtungen mit entgegenwirkender Öffnung aufweist, die entsprechend zwischen der zweiten Welle (104) und dem Rotor (130) der Hochdruckpumpe, zwischen der zweiten Welle (104) und dem mit dem Gehäuse (102) verbundenen Niederdruckleitapparat (112), und zwischen dem Rotor (130) der Hochdruckpumpe und dem Niederdruckleitapparat (129, 111) angeordnet sind.

13. Turbopumpe nach einem der Ansprüche 1 bis 12, dadurch gekennzeichnet, daß sie dynamische Dichtungseinrichtungen (144,145) zwischen den mit der zweiten Welle (104) verbundenen Organen, die Teil des Rotors der Niederdruckpumpe sind und dem Umleitungskanal (162) aufweist, die Fluiddichtungen, wie beispielsweise Scheibchen-Labyrinthe aufweisen, die im Betrieb ein Spiel aufweisen, welches die Fluidraten zwischen dem Umleitungshochdruckfluidstrom (163) und dem Eintrittsniederdruckfluidstrom (107) minimieren.

14. Turbopumpe nach einem der Ansprüche 1 bis 13, dadurch gekennzeichnet, daß die Hauptwelle (101) einen Rotor (130) trägt, der mit dem Hochdruckflügelrad (114) verbunden ist, das mit der zweiten Welle (104) einen Aufnahmeraum des umgeleiteten Flusses (163) definiert, der die gekrümmten hohlen Schaufeln (132) durchquert hat, und den nach dem Eintritt (105) von Niederdruckfluid umgeleiteten Fluß durch die Stützlager (131, 127) der zweiten Welle (104) bezüglich der Hauptwelle (101) und durch die Austrittsöffnungen (154) zurückschickt, die in der zweiten Welle (104) ausgebildet sind.

15. Turbopumpe nach Anspruch 4 oder 5, dadurch gekennzeichnet, daß der Rücklaufkanal (112) durch ein Gußteil (153) begrenzt ist, das im Gehäuse (102) integriert ist, das mit Verstärkungsrippen (151, 152) versehen ist, und daß nur eine ringförmige Dämpfungsdichtung (143) zwischen dem Gußteil (153) und der Hauptwelle (101) gesetzt ist.

16. Turbopumpe nach einem der Ansprüche 1 bis 15, dadurch gekennzeichnet, daß die Gasantriebsturbine (103) der Hauptwelle (101) ein Gehäuse (120) aufweist, das durch radiale Zapfen (116) mit dem Gehäuse (102) der Turbopumpe verbunden ist.
